# EUROPÄISCHE PATENTANMELDUNG

(11) **EP 0 924 125 A2**
(43) Veröffentlichungstag der Anmeldung: **23.06.1999**
(21) Anmeldenummer: 98122340.7
(22) Anmeldetag: 25.11.1998
(51) Int. Cl.: B60T 8/88

(54) **Bremseinrichtung für Fahrzeuge**

(30) Priorität: 20.12.1997 DE 19756976
(71) Anmelder: DaimlerChrysler AG, 70567 Stuttgart (DE)
(72) Erfinder: Belschner, Ralf Dr., 73732 Esslingen (DE)

(57) **Zusammenfassung**

Bei einer Bremseinrichtung für Fahrzeuge, wobei mit elektronischen Schaltungen versehene Radbremsaktuatoren (Radbremseinheiten) über wenigstens ein redundantes Kommunikationssystem ansteuerbar sind, wird vorgeschlagen, daß die Datenübertragung auf dem wenigstens einen Kommunikationssystem nach einer vorgebbaren Kommunikationsmatrix zeitgesteuert und fehlertolerant erfolgt.

## Beschreibung

Die Erfindung betrifft eine Bremseinrichtung für Fahrzeuge, wobei mit elektronischen Schaltungen versehene Radbremsaktuatoren (Radbremseinheiten) über wenigstens ein Kommunikationssystem ansteuerbar sind.

Ein Brems- und Lenksystem für ein Fahrzeug, bei welchem die Radbremsen und die Lenkung des Fahrzeugs durch ein Kommunikationssystem ansteuerbar sind, geht beispielsweise aus der DE 195 26 250 A1 hervor. Bei diesem Brems- und Lenksystem ist zur Vermeidung einer durchgehenden mechanischen Verbindung zwischen dem vom Fahrer betätigbaren Lenkrad und den gelenkten Rädern genauso wie zur Vermeidung einer durchgehenden mechanischen und/oder hydraulischen Verbindung zwischen dem vom Fahrer betätigbaren Bremspedal und der Betriebsbremse für die Räder eine fehlertolerante, vorzugsweise redundante Recheneinheit vorgesehen, in der zumindest für jedes Rad eine Sollbremswirkung und für jedes Rad mit Lenkfunktion eine Sollenkwirkung aufgrund von Sensorsignalen ermittelt wird und bei dem die Bremsfunktion und die Lenkfunktion für die Räder aufgrund der ermittelten Sollbremswirkung und Sollenkwirkung mittels Sellsystemen geregelt bzw. gesteuert wird.

Zur Übertragung der Daten wird ein redundantes Kommunikationssystem, beispielsweise ein redundant ausgeführter Datenbus, verwendet.

Problematisch bei einem derartigen Brems- und Lenksystem ist es, daß zur Ausbildung einer Fehlertroleranz eine Vielzahl von Daten simultan übertragen werden müssen. Insbesondere muß eine Vielzahl zusätzlicher Verwaltungsnachrichten über das Kommunikationssystem transportiert werden.

Der Erfindung liegt daher die Aufgabe zugrunde, eine gattungsgemäße Bremseinrichtung für Fahrzeuge derart weiterzubilden, daß es bei Übertragung möglichst kurzer Nachrichten auf dem Kommunikationssystem derart fehlertrolerant ist, daß wenigstens ein beliebiger Einfachfehler in dem wenigstens einen Kommunikationssystem nicht zu einem Verlust der übertragenen Information führt.

Diese Aufgabe wird bei einer Bremseinrichtung für Fahrzeuge der eingangs beschriebenen Art erfindungsgemäß dadurch gelöst, daß die Datenübertragung auf dem wenigstens einen Kommunikationssystem nach einer vorgebbaren Kommunikationsmatrix zeitgesteuert und fehlertolerant erfolgt.

Die zeitgesteuerte Datenübertragung auf dem wenigstens einen Kommunikationssystem gemäß einer vorgebbaren Kommunikationsmatrix hat den besonders großen Vorteil, daß zeitkritische Informationen bei kurzer Nachrichtenlänge und mit kleiner Anzahl von Verwaltungsnachrichten deterministisch übertragen werden können.

Hinsichtlich der Erzeugung der zu übertragenden Daten wurden bislang noch keine näheren Angaben gemacht. Rein prinzipiell ist jegliche Art der Generierung von Nachrichten denkbar, welche redundant ist und insoweit den in einem Fahrzeug erforderlichen Vorschriften genügt.

Vorteilhafterweise ist vorgesehen, daß wenigstens zwei Zentralrechner vorgesehen sind, welche Steuersignale redundant über das wenigstens eine Kommunikationssystem an die Radbremseinheiten senden. Durch zwei Zentralrechner, welche redundant Steuersignale ausgeben, ist sichergestellt, daß selbst bei Ausfall eines der beiden Zentralrechner dennoch eine weitere Übertragung von Steuersignalen an die Radbremseinheiten gewährleistet ist.

Das Kommunikationssystem kann rein prinzipiell auf die unterschiedlichste Art und Weise ausgebildet sein. Eine besonders vorteilhafte Ausführungsform sieht vor, daß das Kommunikationssystem zwei Datenbusse umfaßt, auf denen jeder Zentralrechner zeitversetzt gegenüber dem anderen Daten sendet und jeder Zentralrechner alle auf dem Kommunikationssystem verfügbaren Daten empfangen kann.

Was die Energieversorgung der beiden Zentralrechner betrifft, so ist vorteilhafterweise vorgesehen, daß die beiden Zentralrechner von zwei voneinander unabhängigen und entkoppelten Energieversorgungseinheiten simultan gespeist werden. Hierdurch ist ein Betrieb der Zentralrechner auch bei Ausfall einer Energieversorgungseinheit sichergestellt.

Um insbesondere eine sehr hohe Modularität und Austauschbarkeit zu ermöglichen, ist vorteilhafterweise vorgesehen, daß die mit dem Kommunikationssystem verbundenen Radbremseinheiten und gegebenenfalls weitere elektrische Schaltungen über ein auf das Kommunkationssystem angepaßtes Interface verbunden sind.

Für die Energieversorgung der vier Radbremseinrichtungen ist vorgesehen, daß sie vorteilhafterweise von den beiden unabhängigen Energieversorgungseinheiten gespeist werden. Damit ist bei Ausfall einer Energieversorgungseinheit mindestens noch ein Notbetrieb, durch welchen eine Bremswirkung erzeugbar ist, möglich.

Zur Ankopplung von Sensoren, beispielsweise Raddrehzahlsensoren oder Sensoren zur Erfassung des Bremswunsches an das Kommunikationssystem und/oder die Zentralrechner ist vorteilhafterweise vorgesehen, daß von Sensoren erfaßte Informationen über das Kommunikationssystem und/oder über zusätzliche Datenleitungen an die wenigstens zwei Zentralrechner übertragbar sind. Auf diese Weise kann das Kommunikationssystem nicht nur zum Übertragen von Steuersignalen sondern auch zum Übertragen von Sensorsignalen verwendet werden. Alternativ oder zusätzlich hierzu können die von den Sensoren erfaßten Informationen auch über zusätzliche Datenleitungen an die beiden Zentralrechner übertragen werden, je nach Sicherheits- und Verfügbarkeitsaspekten.

Insbesondere kann vorgesehen sein, daß die Sensoren eines Pedalmoduls entweder direkt an den wenigstens zwei Zentralrechner oder direkt an das zeitgesteuerte und fehlertolerante Bussystem angeschlossen sind. Durch die Sensoren des Pedalmoduls wird der Fahrerwunsch hinsichtlich der Pedalverstellung erfaßt und im Pedalmodul verarbeitet.

Vorteilhafterweise wird das Pedalmodul ebenfalls von den wenigstens zwei unabhängigen und entkoppelten Energieversorgungseinheiten gespeist.

Was die Anordnung der wenigstens zwei Zentralrechner betrifft, so sind die unterschiedlichsten Ausführungsformen denkbar.

Eine vorteilhafte Ausführungsform sieht vor, daß die wenigstens zwei Zentralrechner im Pedalmodul integriert sind.

Ferner ist vorgesehen, daß wenigstens zwei Energieversorgungseinheiten mit Überwachungseinrichtungen vorgesehen sind. Vorteilhafterweise sind auch diese Überwachungseinrichtungen über das wenigstens eine Kommunikationssystem mit den Zentralrechnern, den Sensoren und den Radbremseinrichtungen verbunden.

Weitere Vorteile und Merkmale der Erfindung werden nachfolgend anhand der beigefügten Zeichnungen erläutert.

In der Zeichnung zeigen:
- Fig. 1: schematisch eine von der Erfindung Gebrauch machende Bremseinrichtung für ein Fahrzeug,
- Fig. 2: schematisch eine Kommunikationsmatrix zur Übertragung von Daten auf einem Kommunikationssystem gemäß der Erfindung.

Nachfolgend werden zum besseren Verständnis zunächst einige Begriffsdefinitionen, die dieser Anmeldung zugrunde gelegt werden, erläutert:
- Fail-Safe-Eigenschaft (Quelle DIN 19 250):: Fähigkeit eines technischen Systems, beim Auftreten bestimmter Ausfälle im sicheren Zustand zu verharren oder unmittelbar in einen anderen sicheren Zustand überzugehen; auch Fehlersicherheit genannt;
- Fehler (DIN 19 250):: Nichterfüllung mindestens einer Anforderung an ein erforderliches Merkmal einer Betrachtungseinheit;
- Fehlertoleranz:: Fähigkeit eines Systems, auch mit einer begrenzten Zahl fehlerhafter Subsysteme seine spezifizierte Funktion zu erfüllen;
- Redundanz:: Vorhandensein von mehr als für die Ausführung der vorgesehenen Aufgaben an sich notwendigen Mitteln.
- Fail-silent:: Die Eigenschaft einer Komponente bzw. eines Systems, welche(s) mit anderen in Kommunikation steht, beim Erkennen eines Fehlers innerhalb der Komponente bzw. innerhalb des Systems keine weiteren Informationen auszusenden.

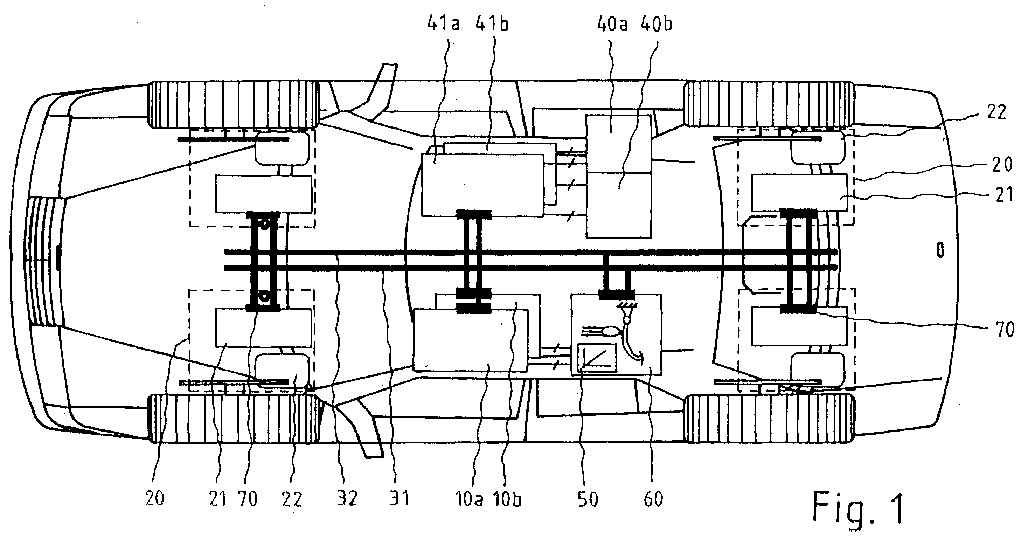

In Fig. 1 ist eine sogenannte Brake-by-Wire Bremseinrichtung eines Kraftfahrzeugs dargestellt, welche Zentralrechner 10a, 10b und Radbremseinheiten 20 umfaßt. Die Radbremseinheiten 20 weisen jeweils eine Radbremselektronik 21 und einen elektrisch ansteuerbaren Bremsaktuator 22 auf. Die Radbremseinheiten 20 kommunizieren mit dem Zentralrechner 10 über zwei Datenbusse 31, 32. Die Zentralrechner 10a, 10b wie auch die Radbremseinheiten 20 werden von zwei redundanten Energieversorgungseinheiten 40a, 40b versorgt, welche ihrerseits mit zwei Überwachungseinrichtungen 41a, 41b für die Energieversorgungseinheiten 40a, 40b verbunden sind.

Die Ankopplung der Einheiten an die Datenbusse erfolgt jeweils über ein Kommunikationsinterface 70, durch welches die Einheiten Zugriff auf an sich bekannte Protokolldienste haben.

Zur Bremswunscherfassung ist ein Pedalmodul mit Sensoren, beispielsweise ein Pedalwegsensor 50 und (nicht dargestellte) Raddrehzahlsensoren vorgesehen, deren Ausgangssignale entweder direkt über Steuerleitungen und/oder über die beiden Datenbusse 31, 32 an die beiden Zentralrechner 10a, 10b weitergegeben werden.

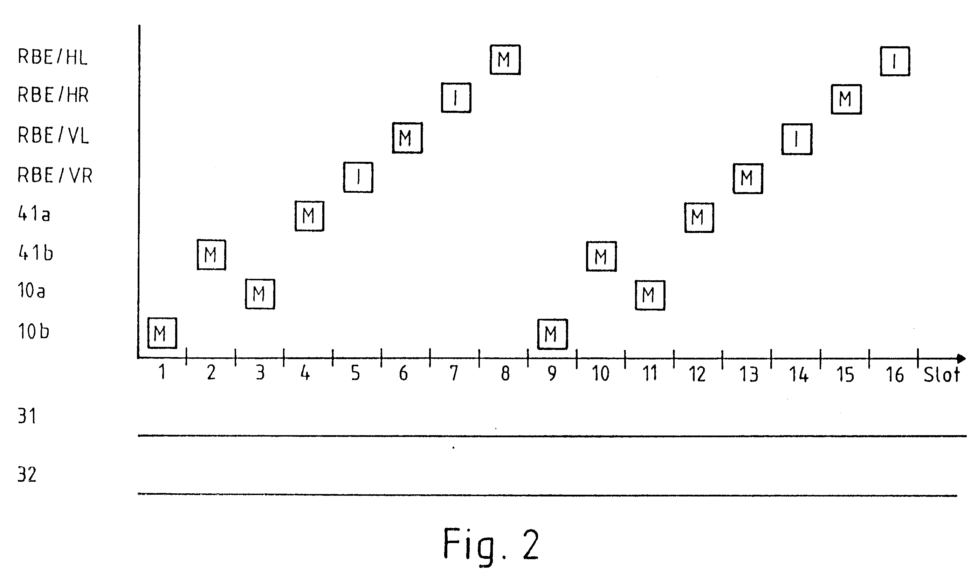

Die Übertragung der Daten auf den beiden das Kommunikationssystem bildenden Datenbussen 31, 32 erfolgt wie in Fig. 2 dargestellt zeitgesteuert. In Fig. 2 bedeuten RBE Radbremseinheit, H hinten, V vorne, L links und R rechts. RBE/HL bedeutet beispielsweise Radbremseinheit hinten links. Mit 10 und 41 sind in Fig. 2 wie in Fig. 1 die beiden Zentralrechner bzw. die Überwachungseinrichtungen der Energieversorgungsein heiten bezeichnet sowie mit 31, 32 die beiden Datenbusse.

Wie aus Fig. 2 hervorgeht, folgt in vorgebbaren Zeitabschitten auf beiden Datenbussen gleichzeitig die Übertragung jeweils einer Nachricht (Message M), wobei "Fahrplan"-ähnlich vorgegeben ist, welche der an die beiden Datenbusse 31, 32 angekoppelten Einheiten zu welcher Zeit Nachrichten senden. Neben diesen Steuer-Nachrichten M werden auf den Datenbussen 31, 32 sogenannte Initialisierungsnachrichten (I-Frame I) gesendet, welche auf an sich bekannte Weise der Initialisierung und Synchronisation der an die Datenbusse 31, 32 angekoppelten Einheiten dienen.

Die dargestellte nach einer vorgebbaren Kommunikationsmatrix zeitgesteuerte und fehlertolerante Übertragung von Nachrichten ermöglicht das Tolerieren eines beliebigen Fehlers unter Beibehaltung der vollen Funktion, es ermöglicht insoweit eine Fehlertoleranz. Sämtliche an die Datenbusse 31, 32 angekoppelten Einheiten sind dabei fail-silent/fail-safe Komponenten. Das gilt auch für den Pedalwegsensor 50 für den Fall, daß dieser direkt an das Datenbussystem angeschlossen wird. Bei einem Ausafall einer Radbremsvorrichtung wird durch die Zentralrechner 10 die Bremskraftverteilung angepaßt. Darüber hinaus werden die redundanten Energieversorgungseinheiten 40 in Form eines redundanten Bordnetzes mit beispielsweise 12V/14V und 36V/42V Bordnetzspannung durch die Überwachungseinrichtungen 41a, 41b kontinuierlich überwacht.

## Patentansprüche

1. Bremseinrichtung für Fahrzeuge, wobei mit elektronischen Schaltungen versehene Radbremsaktuatoren (Radbremseinheiten (20)) über wenigstens ein redundantes Kommunikationssystem ansteuerbar sind, dadurch gekennzeichnet, daß die Datenübertragung auf dem wenigstens einen Kommunikationssystem nach einer vorgebbaren Kommunikationsmatrix zeitgesteuert und fehlertolerant erfolgt.

2. Bremseinrichtung nach Anspruch 1, dadurch gekennzeichnet, daß wenigstens zwei Zentralrechner (10a, 10b) vorgesehen sind, welche Steuersignale redundant über das wenigstens eine Kommunikationssystem (31, 32) an die Radbremseinheiten (20) senden.

3. Bremseinrichtung nach Anspruch 1 oder 2, dadurch gekennzeichnet, daß das wenigstens eine Kommunikationssystem zwei Datenbusse (31, 32) umfaßt, auf denen jeder Zentralrechner (10a, 10b) Daten zeitversetzt gegenüber dem anderen Daten sendet und jeder Zentralrechner alle auf dem Kommunikationssystem verfügbaren Daten empfangen kann.

4. Bremseinrichtung nach einem der Ansprüche 1 bis 3, dadurch gekennzeichnet, daß die wenigstens zwei Zentralrechner (10a, 10b) durch zwei voneinander unabhängige und entkoppelte Energieversorgungseinheiten (40a, 40b) gespeist werden.

5. Bremseinrichtung nach einem der Ansprüche 1 bis 4, dadurch gekennzeichnet, daß jede Radbremseinheit (20) mit dem wenigstens einen Kommunikationssystem (31, 32) über ein auf das Kommunikationssystem angepaßtes Interface (70) verbunden sind.

6. Bremseinrichtung nach Anspruch 5, dadurch gekennzeichnet, daß jede Radbremseinheit von wenigstens zwei unabhängigen und entkoppelten Energieversorgungseinheiten gespeist wird.

7. Bremseinrichtung nach einem der voranstehenden Ansprüche, dadurch gekennzeichnet, daß von Sensoren erfaßte Informationen über das wenigstens eine Kommunikationssystem (31, 32) und/oder über zusätzliche Datenleitungen an die wenigstens zwei Zentralrechner (10a, 10b) übertragbar sind.

8. Bremseinrichtung nach einem der voranstehenden Ansprüche, dadurch gekennzeichnet, daß die Sensoren eines Pedalmoduls (60) entweder an die wenigstens zwei Zentralrechner (10a, 10b) oder direkt an das zeitgesteuerte und fehlertolerante Bussystem angeschlossen sind.

9. Bremseinrichtung nach einem der voranstehenden Ansprüche, dadurch gekennzeichnet, daß das Pedalmodul von den wenigstens zwei unabhängigen und entkoppelten Energieversorgungseinheiten (40a, 40b) gespeist wird.

10. Bremseinrichtung nach einem der voranstehenden Ansprüche, dadurch gekennzeichnet, daß die mindestens doppelt vorhandenen Zentralrechner im Pedalmodul integriert sind.

11. Bremseinrichtung nach einem der voranstehenden Ansprüche, dadurch gekennzeichnet, daß die Energieversorgungseinheiten (40a, 40b) über zwei redundante Überwachungseinrichtungen (41a, 41b) über das wenigstens eine Kommunikationssystem (31a, 31b) mit den Zentralrechnern (10a, 10b) verbunden sind.
